Europäisches Patentamt

European Patent Office

Office européen des brevets

(19)

(11) **EP 0 615 353 B1**

(12) **FASCICULE DE BREVET EUROPEEN**

(45) Date de publication et mention
de la délivrance du brevet:
**18.11.1998 Bulletin 1998/47**

(51) Int Cl.$^6$: **H04B 7/005**, H04Q 7/20,
H04B 1/40

(21) Numéro de dépôt: **94400502.4**

(22) Date de dépôt: **08.03.1994**

(54) **Procédé de contrôle de puissance du paquet d'accès émis par un mobile dans un système de radiocommunication, et système mettant en oeuvre ce procédé**

Verfahren und System zur Leistungssteuerung eines gesendeten Anforderungspakets in einem mobilen Funkkommunikationssystem

Method and system for controlling the power of an access packet in a mobile radiocommunication system

(84) Etats contractants désignés:
**BE DE ES FR GB IT NL SE**

(30) Priorité: **09.03.1993 FR 9302701**

(43) Date de publication de la demande:
**14.09.1994 Bulletin 1994/37**

(73) Titulaire: **ALCATEL ALSTHOM Compagnie Générale d'Electricité**
**75008 Paris (FR)**

(72) Inventeur: **Gourgue, Frederic**
**F-75017 Paris (FR)**

(74) Mandataire: **Lamoureux, Bernard et al**
**COMPAGNIE FINANCIERE ALCATEL**
**Dépt. Propriété industrielle**
**30, avenue Kléber**
**75116 Paris (FR)**

(56) Documents cités:
**WO-A-92/09156**          **GB-A- 2 229 609**
**US-A- 5 129 098**

- **PATENT ABSTRACTS OF JAPAN vol. 17, no. 404 (E-1405) 28 Juillet 1993 & JP-A-50 075 571 (SONY CORP) 26 Mars 1993**

**Description**

La présente invention concerne un procédé de contrôle de la puissance du paquet d'accès émis par un mobile dans un système de radiocommunication.

Elle vise également un système de radiocommunication mettant en oeuvre ce procédé.

Dans les systèmes de radiocommunication avec des mobiles, l'expérience montre que la proportion du temps durant laquelle un mobile est en communication avec une station émettrice/réceptrice de base est en général faible. Le mobile ne doit émettre que dans les situations suivantes :

- lors d'une communication, que celle-ci émane du mobile ou de la station émettrice/réceptrice de base ;
- lors d'échanges d'informations de signalisation hors appel au cours desquels un mobile signale sa présence ou sa localisation.

Lors de l'initialisation d'une telle période d'activité, le mobile doit envoyer un premier message, dit paquet d'accés, sans connaissance a priori de l'affaiblissement qu'il subira avant de parvenir à la station de base. Ce paquet d'accés est donc émis à un niveau de puissance qui ne dépend que de la puissance maximale pour laquelle le mobile a été conçu, et éventuellement d'une limite de puissance diffusée par la station de base pour tous les mobiles dans la zone de couverture de cette dernière.

Dans un environnement radio mobile, l'affaiblissement ou l'atténuation du signal peut être modélisé par deux composantes, comme le décrit l'ouvrage "Mobile Cellular Telecommunications Systems" (systèmes de télécommunication cellulaire mobile) de W.C. LEE, McGRAW-HILL International Editions, 1990 :

- l'atténuation locale, ou évanouissement selon une loi lognormale, qui dépend de l'environnement de propagation et de la distance entre la station de base et le mobile, qui est appelée par la suite, "perte de propagation" ;
- l'évanouissement de Rayleigh provoqué par des interférences résultant de propagations multiples et dont les variations sont beaucoup plus rapides que les atténuations locales.

La puissance du signal reçu par la station de base est donc très variable en fonction de la position du mobile dans la zone de couverture. Le récepteur de la station de base doit donc être conçu pour supporter une très grande dynamique d'entrée, ce qui pose de grandes difficultés pratiques. A titre d'exemple, des dynamiques d'entrée de plus de 100 dB sont fréquemment observées. Les étages en aval doivent parfois être dupliqués. Plusieurs chaînes de dynamique restreinte sont ainsi mises en parallèle pour assurer une couverture globale.

Cette très grande dynamique n'est malheureusement utile que pour ce paquet d'accès car la station de base peut estimer le niveau de signal reçu et répondre en indiquant au mobile la puissance d'émission à utiliser pour permettre une bonne qualité de liaison sans pour autant avoir un niveau inutilement élevé.

Le but de la présente invention est de remédier à ces inconvénients en proposant un procédé de contrôle de la puissance du paquet d'accès émis par un mobile, ce qui permet de réduire la dynamique d'entrée du récepteur de la station émettrice-réceptrice de base.

Suivant l'invention, le procédé de contrôle de la puissance d'un paquet d'accès émis par un mobile vers une station émettrice-réceptrice de base au sein d'un système de radiocommunication, cette station émettrice-réceptrice de base émettant régulièrement un canal de diffusion, est caractérisé en ce que :

- au niveau de la station émettrice-réceptrice de base, on inclut dans le canal de diffusion une information représentative de la puissance d'émission sur ce canal ;
- au niveau du mobile, on effectue une mesure de la puissance reçue sur ce canal, on compare cette mesure de puissance à la puissance d'émission obtenue à partir de l'information de puissance incluse dans le canal de diffusion, on en déduit une estimation de la perte de propagation du mobile vers la station émettrice-réceptrice de base, et on détermine une puissance d'émission optimale du paquet d'accés, à partir de l'estimation de la perte de propagation et de paramètres du système de communications.

Ainsi, le procédé selon l'invention permet au mobile d'optimiser la puissance d'émission du paquet d'accés. Les récepteurs des stations de base sont donc soumis à des contraintes beaucoup moins sévères, ce qui contribue à une simplification de leur conception et à une réduction des coûts. En outre, le procédé selon l'invention offre une meilleure utilisation de l'énergie électrique stockée dans le mobile et permet de réduire les interférences générées par les mobiles.

Suivant un autre aspect de l'invention, il est proposé un système de radiocommunication comprenant plusieurs stations émettrices-réceptrices de base communiquant avec un ensemble de mobiles, chaque station émettrice-réceptrice de base étant agencée pour émettre régulièrement un canal de diffusion, mettant en oeuvre le procédé selon l'invention, caractérisé en ce qu' au moins une desdites stations émettrices-réceptrices de base est agencée pour émettre un canal de diffusion incluant une information représentative de la puissance d'émission dudit canal, et ce qu'au moins un mobile, en phase d'accès dans une cellule gérée par ladite station émettrice-réceptrice de base, comprend des moyens pour fournir une mesure de la puissance de réception du canal de diffusion, des moyens pour comparer cette puissance mesurée à la puissance d'émission, des moyens pour fournir une estimation de la perte de propagation du mobile, et des moyens pour ajuster la puissance d'émission du paquet d'accès à un niveau de puissance d'émission optimale déterminée à partir de l'estimation de perte de propagation et de paramètres dudit système.

D'autres particularités et avantages de l'invention apparaîtront encore dans la description ci-après. Aux dessins annexés donnés à titre d'exemples non limitatifs:

- la figure 1 illustre de façon schématique une phase d'accès d'un mobile dans la cellule d'une station émettrice-réceptrice de base, mettant en oeuvre de procédé selon l'invention ;
- la figure 2 représente deux échelles de puissance associées respectivement à une station émettrice-réceptrice de base et à un mobile, correspondant à un exemple pratique de mise en oeuvre du procédé selon l'invention ; et
- la figure 3 illustre les conséquences d'une imprécision sur l'estimation de la perte de propagation sur la puissance reçue par la station émettrice-réceptrice de base.

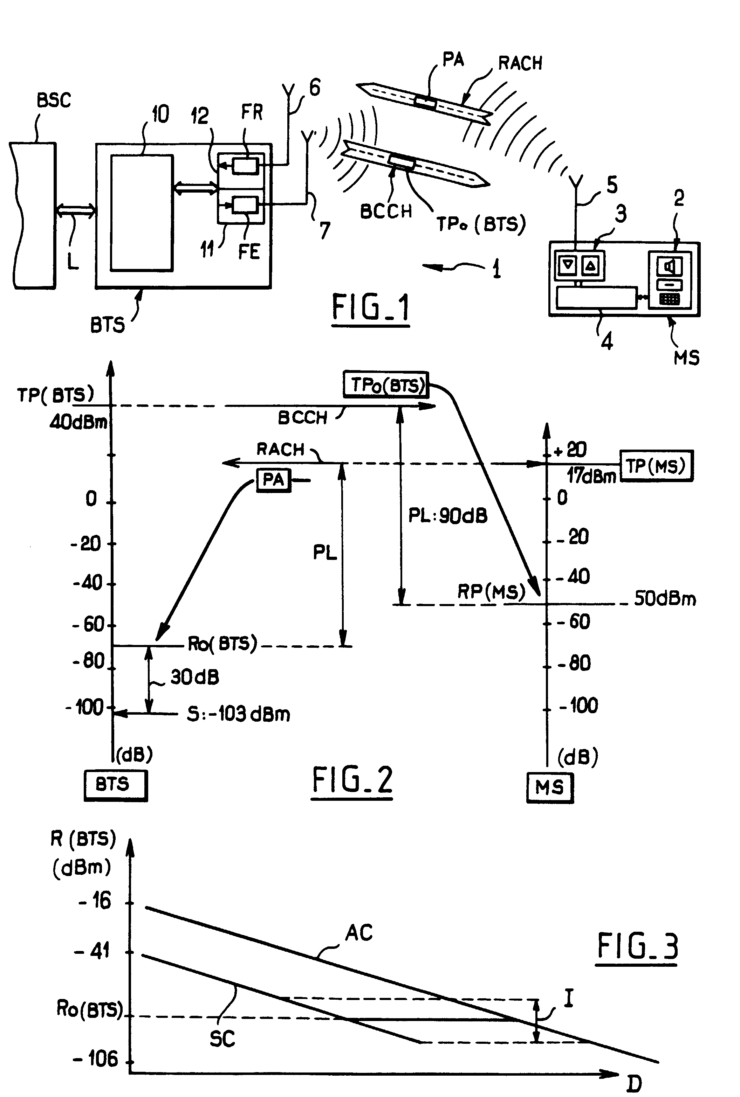

On va maintenant expliquer le procédé de contrôle de puissance selon l'invention, en s'appuyant sur un exemple d'application à des systèmes numériques de radiocommunication de type GSM ("Global System for Mobile Communications") ou TETRA ("Trans European Trunk RAdio"). En référence à la figure 1, on va maintenant expliquer comment le procédé selon l'invention est mis en oeuvre lorsqu'un mobile MS accède à une cellule gérée par une station émettrice-réceptrice de base BTS. Dans le cas d'un système GSM par exemple, cette station émettrice-réceptrice de base BTS peut être reliée par une liaison numérique L, par exemple de type ABIS, à un centre de commutation de base BSC.

On considère, à titre d'exemple non limitatif, une configuration dans laquelle la station émettrice-réceptrice de base BTS possède deux antennes 7, 6 affectées respectivement à l'émission et à la réception et que le mobile MS en phase d'accès est muni d'une antenne unique 5, comme c'est le cas de la quasi-totalité des mobiles. La station émettrice-réceptrice de base BTS comprend généralement un bloc émetteur 11 relié à l'antenne émettrice 7 et un bloc récepteur 12 relié à l'antenne réceptrice 6, ces deux blocs étant reliés à une unité de traitement en bande de base et comprenant des moyens de filtrage appropriés.

Le mobile MS comprend un bloc d'émission-réception 3 relié d'une part, à l'antenne commune 5 et d'autre part à une unité de traitement 4. Dans le cas d'un mobile radiotéléphone, cette unité de traitement est reliée à des équipements d'interface avec l'utilisateur, notamment un haut-parleur, un microphone et un clavier. Mais le procédé selon l'invention peut également s'appliquer à des mobiles de données dotés seulement d'un clavier.

Les systèmes numériques de radiocommunication disposent d'un canal, - désigné par exemple par le terme BCCH pour "Broadcast Channel" (canal de diffusion) -, sur lequel des messages d'information sur le système sont régulièrement diffusés. Ce canal de diffusion (BCCH) est émis en permanence dans le cas du système GSM mais peut être intermittent dans une cellule de données d'un système TETRA. De toute façon, lorsque ce canal BCCH est émis, c'est à un niveau de puissance constant fixé par l'opérateur du système. Le procédé selon l'invention prévoit d'inclure dans ce canal un message supplémentaire TPo(BTS) indiquant la puissance d'émission sur cette porteuse, auquel un éventuel terme correctif décrit par la suite a pu être ajouté.

Le mobile MS peut alors déterminer l'affaiblissement que subissent les messages qui lui parviennent en comparant la puissance reçue (éventuellement moyennée) à la puissance à laquelle ils ont été émis et émettre sur le canal d'accès, désigné notamment par le terme RACH pour "Random Access Channel" (Canal d'accès aléatoire), un paquet d'accès PA qui est reçu et traité par la station émettrice-réceptrice de base BTS.

L'opération de moyennage supprime partiellement l'évanouissement de Rayleigh et extrait l'atténuation due à la perte de propagation. Ceci évite une estimation qui serait faussée à cause d'un évanouissement profond. On peut en outre rendre le système résistant aux erreurs d'estimation.

L'estimation porte sur l'affaiblissement dans le sens de la station de base vers le mobile, mais c'est une bonne estimation de l'affaiblissement de propagation dans le sens du mobile MS vers la station de base BTS dans la mesure où les fréquences utilisées en émission et en réception sont proches et où un moyennage est effectué. Ce moyennage permet de s'affranchir d'éventuelles variations rapides du canal de propagation, sous la forme par exemple d'évanouissements de Rayleigh. La puissance d'émission optimale TPo(MS) est alors fonction de plusieurs paramètres du système qui peuvent être soit fixés, soit émis par la station de base (BTS) sur le canal de diffusion BCCH. On peut citer, à titre d'exemples les paramètres suivants :

- la sensibilité de la station de base BTS ;
- une marge à prendre sur le calcul de la puissance d'émission optimale (TPo(MS)), pour tenir compte d'un certain aléa sur la mesure de puissance, ou pour compenser un éventuel déséquilibre dans le bilan de liaison entre le sens montant et le sens descendant. La justification et la définition de cette marge seront présentés en détail dans la suite.

A titre d'exemple, en référence à la figure 2, on considère un système dont la sensibilité S des stations émettrices-réceptrices de base BTS est égale à -103 dBm, et conçu pour qu'un paquet d'accés PA arrive sur le canal d'accés RACH avec un niveau de puissance si possible 30 dB au dessus de cette sensibilité S, à savoir à un niveau de puissance Ro(BTS) de -73 dBm. Si on suppose que le canal de diffusion BCCH est émis régulièrement avec une puissance TP (BTS) égale à 40 dBm, un mobile MS, recevant ce canal avec un niveau de puissance mesurée RP(MS), par exemple, égal à - 50 dBm, en déduira que l'atténuation subie est égale à :

$$40-(-50)=90 \text{ dB}$$

La puissance d'émission optimale TPo(MS) déterminée dans un mode de réalisation de l'invention est alors égale à :

$$90-73=17 \text{ dBm}.$$

Ces différentes opérations peuvent être réalisées au sein du mécanisme interne de contrôle de puissance du mobile, pour régler la puissance du paquet d'accés PA émis sur le canal d'accés RACH.

On va maintenant présenter, à titre d'exemple de mise en oeuvre du procédé selon l'invention, un bilan de liaison entre une station émettrice-réceptrice de base BTS et un mobile, en considérant que ce mobile utilise la même antenne pour recevoir et émettre, ce qui correspond à la quasi-totalité des réalisations pratiques. En revanche, on considère, pour la station émettrice-réceptrice de base BTS, deux antennes distinctes pour l'émission et la réception

On peut ainsi envisager une mise en oeuvre du procédé selon l'invention, basée sur le bilan de liaison représenté sur le tableau suivant :

|  | Station de base BTS | Mobile MS |
|---|---|---|
| Puissance d'émission | canal de diffusion BCCH TP(BTS) | canal d'accès TP(MS) |
| pertes dans les câbles et filtres | B(BTS) | B(MS) |
| gain d'antenne en émission (en dBi) | C(BTS) | C(MS) |
| puissance isotrope rayonnée équivalente (PIRE) | TP(BTS)-B(BTS)+C(BTS) | TP(MS)-B(MS)+C(MS) |
| perte de propagation | PL | PL |
| niveau de signal sur l'antenne de réception | TP(BTS)-B(BTS)+C(BTS)-PL | TP(MS)-B(MS)+C(MS)-PL |
| gain d'antenne en réception | G(BTS) | C(MS) |
| pertes de câble en réception | H(BTS) | H(MS) |
| puissance d'entrée en réception | RP(BTS)=TP(MS)-B(MS)+C(MS)-PL+G(BTS)-H(BTS) | RP(MS)=TP(BTS)-B(BTS)+C(BTS)-PL+C(MS)-H(MS) |

Soient :

TP(MS) :     la puissance d'émission utilisée par le mobile MS pour l'émission du paquet d'accès PA sur le canal d'accès (RACH) ;

TP(BTS) :     la puissance d'émission utilisée par la station émettrice-réceptrice de base BTS et signalée sur le canal de diffusion BCCH ;

RP(MS) :     le niveau de puissance, mesuré par le mobile MS ;

RP(BTS) :     le niveau de puissance reçue par la station émettrice-réceptrice de base BTS ;

B(BTS) et B(MS) :     les puissances dissipées dans les filtres et câbles d'émission respectivement de la station émettrice-réceptrice de base BTS et du mobile MS ;

C(BTS) et C(MS) :     les gains d'antenne de la station émettrice-réceptrice de base BTS en émission et du mobile MS en émission et réception;

G(BTS): les gains d'antenne en réception respectifs de la station émettrice- réceptrice de base BTS;
H(BTS) et H(MS) : représentent les pertes dans les câbles et connexions en réception respectivement dans la station émettrice-réceptrice de base BTS et dans la mobile MS.

Il est à noter que le gain d'antenne G(BTS) peut tenir compte du gain apporté par la diversité d'antenne pour le cas où plusieurs antennes seraient utilisées en réception.

Une estimation de la perte de propagation PL par le mobile MS peut être exprimée à partir de l'expression de la puissance RP(MS) reçue par le mobile MS, donnée dans la dernière ligne du tableau ci-dessus :

$$PL=TP(BTS)-RP(MS)+(C(MS)-H(MS))+(C(BTS)-B(BTS))$$

Si Ro(BTS) représente le niveau de signal souhaité sur le connecteur d'antenne du récepteur de la station émettrice-réceptrice de base BTS, le niveau optimal de puissance d'émission du paquet d'accés PA est alors :

$$TPo(MS)=Ro(BTS)+(B(MS)-C(MS))+(H(BTS)-G(BTS))+PL$$

L'insertion de l'expression de la perte de propagation PL dans la relation précitée permet d'obtenir:

$$TPo(MS)=Ro(BTS)+TP(BTS)+(H(BTS)-B(BTS))+(C(BTS)-G(BTS))+(B(MS)-H(MS))-RP(MS)$$

Le terme (H(BTS)-B(BTS))+(C(BTS)-G(BTS)), désigné dans la suite sous le terme de composante de base (x), correspond à la marge nécessaire à la prise en compte de la structure interne d'émission-réception de la station de base. Il peut être préalablement mesuré, défini ou calculé et permet d'établir une puissance d'émission corrigée TPo (BTS) exposée dans la suite. Si, au niveau de la station émettrice-réceptrice de base BTS, la même antenne est utilisée pour l'émission et la réception, alors le terme x se réduit à x=(H(BTS)-B(BTS)) et donc à la différence des pertes de puissance dans les câbles et filtres entre respectivement la réception et l'émission au niveau de la station de base.

Le terme (B(MS)-H(MS)), appelé dans la suite composante de mobile y, représente la différence entre les pertes dans les câbles dans le bloc récepteur du mobile MS et les pertes dans les câbles et les filtres dans le bloc émetteur dudit mobile MS. Puisque la même antenne est utilisée en émission et en réception, les câbles sont les mêmes. La différence concerne alors uniquement les pertes de filtrage F(MS) qui en pratique se situent dans une gamme [1.5±1.5] dB.

En conclusion, la marge globale utilisée pour le calcul de la puissance optimale d'émission du paquet d'accés PA peut être exprimée de la façon suivante:

- dans le cas d'antennes distinctes en émission et en réception pour la station émettrice-réceptrice de base BTS, ou d'un gain supplémentaire obtenu par l'utilisation d'une diversité d'antenne,

$$X=(H(BTS)-B(BTS))+(C(BTS)-G(BTS))+F(MS),$$

- dans le cas d'une antenne unique pour la station de base,

$$X=(H(BTS)-B(BTS)+F(MS))$$

Le niveau optimal de puissance d'émission TPo(MS)du paquet d'accés PA, contrôlée grâce au procédé selon l'invention, peut être exprimée de la façon suivante :

$$TPo(MS)=Ro(BTS)+TPo(BTS)-RP(MS)+y$$

où :

TPo(BTS) représente la puissance d'émission corrigée de la station d'émission-réception de base, prenant en compte les pertes au niveau des filtres d'entrée et des câbles tant en émission qu'en réception et le gain des antennes de réception et d'émission. Soit x la composante de base de la marge globale définie ci-dessus :

$$TPo(BTS)=TP(BTS)+x$$

On peut alors exprimer la puissance souhaitable du paquet d'émission en fonction de la puissance de réception souhaitée au niveau de la station de base, de la puissance corrigée émise par la station de base sur le canal de diffusion BCCH, de la puissance reçue sur ce canal par le mobile MS et de la marge à prendre sur le calcul de puissance pour tenir compte d'aléa sur la mesure de puissance et pour compenser un éventuel déséquilibre dans le bilan de liaison entre le sens montant (du mobile MS vers la station émettrice-réceptrice de base BTS) et le sens descendant (de la station émettrice-réceptrice de base BTS).

La puissance d'émission optimale (TPo(MS)) du paquet d'accés PA est alors :

$$TPo(MS)=Ro(BTS)+TPo(BTS)-RP(MS)+y$$

La variable y représentant la composante de marge à prendre pour tenir compte des pertes dans les composants de filtrage du mobile MS. Il est à noter que la composante de marge de base x à prendre pour tenir compte des atténuations et différences de gain au niveau de la station émettrice-réceptrice de base BTS est intégrée dans la puissance d'émission corrigée TPo(BTS).

La mise en oeuvre du procédé selon l'invention peut être d'au moins deux manières différentes :

- on peut diffuser sur le canal de diffusion BCCH à la fois une information indicative de la puissance d'émission corrigée TPo(BTS) et une information indicative de la puissance de réception souhaitée Ro(BTS);
  ou

- on peut diffuser sur le canal de diffusion BCCH une information indicative de la puissance d'émission corrigée TPo (BTS) et définir la puissance de réception souhaitée Ro(BTS) dans le standard de communication, cette dernière information étant alors résidente dans les moyens de contrôle et de traitement du mobile MS.

La première option consistant à diffuser les deux informations de puissance sur le canal de diffusion BCCH présente l'avantage d'être plus flexible, tandis que la seconde option permet d'économiser de la place sur le canal de diffusion BCCH.

Le choix d'une option peut être orienté par les considérations pratiques sur la dynamique de réglage de puissance du mobile MS, exposées ci-dessous.

A titre d'exemple, on peut considérer un cas pratique dans lequel la dynamique de réglage de puissance du mobile MS peut avoir pour seuil 15 dBm et atteindre la puissance nominale d'émission du mobile MS par incréments de 5 dB. Cela signifie que la puissance d'émission du paquet d'accés PA sera réglée, certes à partir de la puissance d'émission optimale (TPo(MS)) calculée, mais en pratique sur le niveau de puissance accessible le plus proche de la puissance optimale.

En pratique, tous les mobiles à l'intérieur d'un cercle de rayon minimum Rmin émettront leur paquet d'accés avec un niveau de puissance de 15 dBm correspondant au seuil minimum de puissance. Il faut noter que le rayon minimum est pris suffisamment grand pour éviter tout risque de saturation de la station émettrice-réceptrice de base BTS. L'équipement récepteur de cette dernière peut ainsi être conçu pour recevoir des paquets d'accés provenant de mobiles proches à un niveau seuil de 15 dBm au lieu du niveau maximum généralement prévu dans l'art antérieur. On obtient ainsi une diminution égale à la différence entre le seuil maximal possible et le seuil minimal qui présente des contraintes de dynamique d'entrée sur le récepteur de la station émettrice-réceptrice de base BTS, ce qui contribue à simplifier significativement la conception de ce récepteur et à réduire le coût de l'équipement radio. A titre d'exemple, le seuil minimal dans un système TETRA est de 15 dBm alors que le seuil maximal peut aller jusqu'à 40 dBm, ce qui correspond à une réduction de dynamique d'entrée de 25 dB.

L'option consistant à prédéterminer une valeur appropriée de la puissance souhaitée Ro(BTS) permet d'obtenir un bon comportement du système. On considère par exemple un niveau de sensibilité du récepteur de la station émettrice-réceptrice de base BTS égal à -106 dBm et un niveau de réception d'au moins 20 dB pour garantir un bon rapport signal/bruit, la puissance requise en entrée est alors -106+20=-86 dBm. Si on considère en outre une marge globale de 13 dB, que l'on peut décomposer en une composante égale à 10dB de marge sur l'estimation de la perte de propagation et une composante de mobile y égale à -3dB notamment pour prendre en compte des pertes au niveau du filtrage en réception dans le mobile MS, la valeur finale de la puissance souhaitée Ro(BTS) est alors -73 dBm.

Pour une station émettrice-réceptrice de base BTS présentant une puissance d'émission corrigée TPo(BTS) égale à 46 dBm, le mobile MS devra réduire sa puissance d'émission au seuil de 15 dBm dès que la puissance de réception du mobile MS atteint :

$$RP(MS)=-73-15+46=-42 \text{ dBm}$$

ce qui correspond à une perte de propagation égale à 46-(-42)=88 dB.

Ce niveau de perte de propagation correspond en pratique à une distance de 700 mètres pour un équipement standard utilisé dans la bande des 400 MHz. Une imprécision sur l'estimation de la perte de propagation modifierait cette distance de quelques dizaines de mètres, ce qui affecterait la puissance reçue par la station émettrice-réceptrice de base BTS lorsque le niveau de signal est d'environ -70 dBm mais n'aurait pas d'effet sur le niveau de puissance maximum reçue par la station de base. Par ailleurs, du fait qu'une marge importante a été prise en compte, le niveau de signal reçu par la station de base reste très élevé même si une forte imprécision apparaissait lors de l'estimation de la perte de propagation. La performance globale du système est donc très peu sensible à la valeur exacte de la puissance Ro(BTS) souhaitée en entrée du récepteur de la station de base, comme l'illustre le diagramme de la figure 3 qui représente l'évolution de la puissance de réception de la station de base RP(BTS) en fonction de la distance D entre le mobile MS et cette station de base. Une première droite AC correspond à l'atténuation de la puissance reçue en l'absence de contrôle de puissance, tandis qu'une seconde droite SC correspond à l'atténuation de puissance reçue dans le cas où le procédé de contrôle de puissance selon l'invention est mis en oeuvre. Une imprécision sur l'estimation de la perte de propagation aura un impact I limité sur la puissance effectivement reçue en entrée du récepteur de la station de base, autour de la puissance de réception souhaitée Ro(BTS).

Il est donc envisageable d'inclure dans le standard de communication une valeur fixe de puissance souhaitée, voisine de -73 dBm dans le cas de l'exemple donné. Une valeur supérieure est envisageable tant que l'on ne risque pas de saturer la station de base.

Le codage de l'information de puissance corrigée transmise TPo(BTS) sur le canal de diffusion BCCH par la station émettrice-réceptrice de base BTS requiert en pratique un faible nombre de bits. En effet, à titre d'exemple pratique, on peut considérer une dynamique de puissance de sortie de la station émettrice-réceptrice de base BTS égale à 26 dB, se répartissant par exemple en 14 dB de classe de puissance et 12 dB en régulation de puissance.

Bien sûr, l'invention n'est pas limitée aux exemples qui viennent d'être décrits et de nombreux aménagements peuvent être apportés à ces exemples sans sortir du cadre de l'invention.

## Revendications

1. Procédé de contrôle de la puissance d'un paquet d'accès (PA) émis par un mobile (MS) sur un canal d'accès vers une station émettrice-réceptrice de base (BTS) au sein d'un système de radiocommunication, cette station émettrice-réceptrice de base (BTS) émettant régulièrement un canal de diffusion (BCCH), caractérisé en ce que :

   - au niveau de la station émettrice-réceptrice de base (BTS), on inclut dans le canal de diffusion (BCCH) une information de puissance représentative de la puissance d'émission sur ce canal ;
   - au niveau du mobile (MS), on effectue une mesure de la puissance reçue sur ce canal, on compare cette mesure de puissance (RP(MS)) à la puissance d'émission obtenue à partir de l'information de représentation de la puissance émise incluse dans le canal de diffusion (BCCH), pour en déduire une estimation de la perte de propagation du mobile (MS) vers la station émettrice-réceptrice de base (BTS), et on détermine une puissance d'émission optimale (TPo(MS)) du paquet d'accès (PA), à partir de l'estimation de la perte de propagation et de paramètres du système de radiocommunication.

2. Procédé selon la revendication 1, caractérisé en ce qu'un moyennage de la puissance mesurée est effectué avant sa comparaison avec la puissance d'émission.

3. Procédé selon l'une des revendications 1 ou 2, caractérisé en ce que les paramètres du système pris en compte pour la détermination de la puissance d'émission optimale (TPo(MS)) du paquet d'accès (PA) comprennent la sensibilité en réception de la station émettrice-réceptrice de base (BTS) et une marge globale (X) à prendre sur le calcul de ladite puissance d'émission optimale (TPo(MS)).

4. Procédé selon la revendication 3, caractérisé en ce que la puissance d'émission optimale (TPo(MS)) du paquet d'accès (PA) est déterminée par la relation suivante :

$$TPo(MS)=TP(BTS)-RP(MS)+Ro(BTS)+X$$

où :

- TP(BTS) est la puissance d'émission du canal de diffusion (BCCH) par la station émettrice-réceptrice de base (BTS),
- RP(MS) est la puissance reçue mesurée par le mobile (MS),
- Ro(BTS) est la puissance souhaitée en réception par la station émettrice-réceptrice de base (BTS), et
- X représente la marge globale de calcul.

**5.** Procédé selon la revendication 4, caractérisé en ce que la puissance optimale (TPo(MS)) d'émission du paquet d'accés (PA) est déterminée par la relation suivante :

$$TPo(MS)= TPo(BTS)-RP(MS)+Ro(BTS)+y$$

où :

- TPo(BTS) représente une puissance d'émission corrigée égale à la puissance d'émission TP(BTS) du canal de diffusion (BCCH) augmentée d'une composante de base (x) de la marge globale (X), cette composante de base (x) étant représentative de déséquilibres du bilan de liaison au sein de la station émettrice-réceptrice de base (BTS),
- RP(MS) représente la mesure de puissance reçue par le mobile (MS), éventuellement moyennée,
- Ro(BTS) représente la puissance souhaitée en réception par la station émettrice-réceptrice de base (BTS), et
- y représente une seconde composante de la marge globale (X), incluant notamment des pertes en réception au niveau du mobile (MS).

**6.** Procédé selon la revendication 5, caractérisé en ce que l'on diffuse sur le canal de diffusion (BCCH) d'une part, une information indicative de la puissance (Ro(BTS)) souhaitée en entrée de la station émettrice-réceptrice de base (BTS) et d'autre part, une information indicative de ladite puissance d'émission corrigée (TPo(BTS)).

**7.** Procédé selon la revendication 5, caractérisé en ce que l'on diffuse sur le canal de diffusion (BCCH) une information indicative de la puissance d'émission corrigée (TPo(BTS)) et en ce que la puissance souhaitée (Ro(BTS)) en entrée de la station émettrice-réceptrice de base est prédéfinie dans le standard (GSM, TETRA) régissant le système de radiocommunication.

**8.** Procédé selon la revendication 7, caractérisé en ce qu'on calcule au niveau d'un mobile (MS) en phase d'accès, avant toute émission par ce mobile (MS) d'un paquet d'accès (PA) destiné à la station émettrice-réceptrice de base (BTS) sur un canal d'accès (RACH), la puissance optimale d'émission dudit paquet d'accés (PA) (TPo(MS)) à partir de l'information de puissance d'émission corrigée TPo(BTS) reçue via le canal de diffusion (BCCH), de la mesure de la puissance RP(MS) reçue par le mobile (MS) sur ce canal de diffusion (BCCH), et d'une information interne de puissance de réception souhaitée (R'o(BTS)) correspondant à la puissance de réception souhaitée Ro(BTS) prédéfinie augmentée de la seconde composante de marge (y), selon la relation suivante :

$$TPo(MS)=TPo(BTS)-RP(MS)+R'o(BTS)$$

**9.** Procédé selon l'une quelconque des revendications 5 à 8, caractérisé en ce que l'information indicative de la puissance d'émission corrigée (TPo(BTS)) diffusée sur le canal de diffusion (BCCH) est codée sur un nombre prédéterminé de bits choisi de sorte que l'incrément de réglage ainsi obtenu soit suffisamment faible devant la puissance nominale d'émission du mobile (MS).

**10.** Procédé selon la revendication 9, caractérisé en ce que le nombre de bits de codage de l'information de puissance d'émission corrigée (TPo(BTS)) est égal à 3.

**11.** Procédé selon l'une quelconque des revendications 5 à 10, appliqué à un mobile (MS) utilisant une même antenne en émission et en réception, caractérisé en ce que la seconde composante de marge (y) est choisie supérieure ou égale à une estimation préalable des pertes de filtrage en réception dans ce mobile (MS).

**12.** Procédé selon l'une quelconque des revendications 5 à 11, appliqué à une station émettrice-réceptrice de base (BTS) utilisant une même antenne en émission et en réception, caractérisé en ce que la composante de marge de base (x) est choisie supérieure ou égale à une estimation préalable au niveau de la station émettrice-réceptrice de base (BTS) de la différence entre, d'une part, les pertes dans les câbles en réception et d'autre part, les pertes dans les câbles et de filtrage en émission.

13. Système de radiocommunication (1) comprenant plusieurs stations émettrices-réceptrices de base (BTS) communiquant avec un ensemble de mobiles (MS), chaque station émettrice-réceptrice de base (BTS) étant agencée pour émettre régulièrement sur un canal de diffusion (BCCH), caractérisé en ce qu'au moins une desdites stations émettrices-réceptrices de base (BTS) est agencée pour émettre sur le canal de diffusion (BCCH) une information représentative de la puissance d'émission (TP(BTS)) dudit canal, et ce qu'au moins un mobile (MS), en phase d'accés dans une cellule gérée par ladite station émettrice-réceptrice de base (BTS), comprend des moyens pour fournir une mesure de la puissance de réception du canal de diffusion (BCCH), des moyens pour comparer cette puissance mesurée à la puissance d'émission (TP(BTS)) et fournir une estimation de la perte de propagation entre le mobile (MS) et la station émettrice-réceptrice de base (BTS), et des moyens pour ajuster la puissance d'émission du paquet d'accès (PA) à un niveau de puissance d'émission optimale (TPo(MS)) calculé à partir de l'estimation de perte de propagation et de paramètres dudit système (1).

14. Système (1) selon la revendication 13, caractérisé en ce que les moyens de fourniture d'une mesure de la puissance reçue sont agencés pour effectuer un moyennage d'un ensemble de mesures de puissance reçue.


## Patentansprüche

1. Verfahren zum Steuern der Leistung eines Zugangspakets (PA), das von einem mobilen Gerät (MS) auf einem Zugangskanal zu einer Basis-Sende/Empfangsstation (BTS) in einem Funksystem gesendet wird, wobei diese Basis- Sende/Empfangsstation (BTS) regelmäßig einen Übertragungskanal (BCCH) aussendet, dadurch gekennzeichnet, daß:

   - bei der Basis-Sende/Empfangsstation (BTS) in den Übertragungskanal (BCCH) eine Leistungsinformation eingeschlossen wird, die die Sendeleistung auf diesem Kanal darstellt;
   - beim mobilen Gerät (MS) eine Messung der auf diesem Kanal empfangenen Leistung ausgeführt wird, diese Leistungsmessung (RP(MS)) mit der Sendeleistung verglichen wird, die ausgehend von der im Übertragungskanal (BCCH) eingeschlossenen Information der Darstellung der gesendeten Leistung erhalten wurde, um daraus eine Schätzung des Übertragungsverlustes vom mobilen Gerät (MS) zur Basis-Sende/Empfangsstation (BTS) herzuleiten, und ausgehend von der Schätzung des Übertragungsverlustes und den Parametern des Funksystems eine optimale Sendeleistung (TPo(MS)) des Zugangspakets (PA) bestimmt wird.

2. Verfahren nach Anspruch 1, dadurch gekennzeichnet, daß vor ihrem Vergleich mit der Sendeleistung eine Mittelwertbildung der gemessenen Leistung ausgeführt wird.

3. Verfahren nach einem der Ansprüche 1 oder 2, dadurch gekennzeichnet, daß die für die Bestimmung der optimalen Sendeleistung (TPo(MS)) des Zugangspakets (PA) berücksichtigten Parameter des Systems die Empfangsempfindlichkeit der Basis-Sende/Empfangsstation (BTS) und eine in die Berechnung der optimalen Sendeleistung (TPo(MS)) einzubeziehende Gesamtspanne (X) umfassen.

4. Verfahren nach Anspruch 3, dadurch gekennzeichnet, daß die optimale Sendeleistung (TPo(MS)) des Zugangspakets (PA) durch die folgende Beziehung bestimmt ist:

$$TPo(MS) = TP(BTS) - RP(MS) + Ro(BTS) + X$$

worin:

   - TP(BTS) die Sendeleistung des Übertragungskanals (BCCH) durch die Basis-Sende/Empfangsstation (BTS) ist,
   - RP(MS) die vom mobilen Gerät (MS) gemessene, empfangene Leistung ist,
   - Ro(BTS) die im Empfang durch die Basis-Sende/Empfangsstation (BTS) gewünschte Leistung ist, und

- X die Gesamtspanne der Berechnung darstellt.

5. Verfahren nach Anspruch 4, dadurch gekennzeichnet, daß die optimale Sendeleistung (TPo(MS)) des Zugangspakets (PA) durch die folgende Beziehung bestimmt ist:

$$TPo (MS) = TPo(BTS) - RP(MS) + Ro(BTS) + y$$

worin:

- TPo(BTS) eine korrigierte Sendeleistung gleich der durch eine Basiskomponente (x) der Gesamt spanne (X) erhöhten Sendeleistung TP(BTS) des Übertragungskanals (BCCH) darstellt, wobei diese Basiskomponente (x) die Ungleichgewichte der Verbindungsbilanz in der Basis-Sende/Empfangsstation (BTS) darstellt,
- RP(MS) die eventuell gemittelte Messung der vom mobilen Gerät (MS) empfangenen Leistung darstellt,
- Ro(BTS) die im Empfang durch die Basis-Sende/Empfangsstation (BTS) gewünschte Leistung darstellt, und
- y eine zweite Komponente der Gesamt spanne (X) darstellt, die insbesondere die Verluste im Empfang beim mobilen Gerät (MS) einschließt.

6. Verfahren nach Anspruch 5, dadurch gekennzeichnet, daß auf dem Übertragungskanal (BCCH) einerseits eine die im Eingang der Basis-Sende/Empfangsstation (BTS) gewünschte Leistung (Ro(BTS)) angebende Information und andererseits eine die korrigierte Sendeleistung (TPo(BTS)) angebende Information Übertragen wird.

7. Verfahren nach Anspruch 5, dadurch gekennzeichnet, daß auf dem Übertragungskanal (BCCH) eine die korrigierte Sendeleistung (TPo(BTS)) angebende Information übertragen wird und daß die am Eingang der Basis-Sende/Empfangsstation gewünschte Leistung (Ro(BTS)) im Standard (GSM, TETRA), der das Funksystem regelt, vordefiniert ist.

8. Verfahren nach Anspruch 7, dadurch gekennzeichnet, daß beim mobilen Gerät (MS) in Zugangsphase vor jeder Aussendung eines für die Basis-Sende/Empfangsstation (BTS) bestimmten Zugangspakets (PA) durch dieses mobile Gerät auf einem Zugangskanal (RACH) die optimale Sendeleistung des Zugangspakets (PA) (TPo(MS)) ausgehend von der über den Übertragungskanal (BCCH) empfangenen Information über die korrigierte Sendeleistung TPo(BTS), der Messung der vom mobilen Gerät (MS) auf diesem Übertragungskanal (BCCH) empfangenen Leistung und einer internen Information über die gewünschte Empfangsleistung (R'o(BTS)), die der vordefinierten gewünschten Empfangsleistung Ro(BTS) entspricht, die um die zweite Komponente der Spanne (y) erhöht ist, gemäß der folgenden Beziehung berechnet wird:

$$TPo(MS) = TPo(BTS) - RP(MS) + R'o(BTS)$$

9. Verfahren nach einem der Ansprüche 5 bis 8, dadurch gekennzeichnet, daß die Information, die die auf dem Übertragungskanal (BCCH) übertragene, korrigierte Sendeleistung (TPo(BTS)) angibt, auf einer vorbestimmten Anzahl von Bits codiert ist, die so ausgewählt ist, daß das so erhaltene Steuerungsinkrement gegenüber der nominalen Sendeleistung des mobilen Geräts (MS) ausreichend schwach ist.

10. Verfahren nach Anspruch 9, dadurch gekennzeichnet, daß die Anzahl von Bits zur Codierung der Information der korrigierten Sendeleistung (TPo(BTS)) gleich 3 ist.

11. Verfahren nach einem der Ansprüche 5 bis 10, das bei einem mobilen Gerät (MS) angewendet wird, das beim Senden und Empfangen dieselbe Antenne verwendet, dadurch gekennzeichnet, daß die zweite Komponente (y) der Spanne größer oder gleich einer vorhergehenden Schätzung der Filterverluste beim Empfang in diesem mobilen Gerät (MS) gewählt wird.

12. Verfahren nach einem der Ansprüche 5 bis 11, das bei einer Basis-Sende/Empfangsstation (BTS) verwendet wird, die beim Senden und Empfangen dieselbe Antenne verwendet, dadurch gekennzeichnet, daß die Komponente (x) der Basisspanne größer oder gleich einer vorhergehenden Schätzung bei der Basis-Sende/Empfangsstation (BTS) der Differenz zwischen einerseits den Verlusten in den Kabeln beim Empfang und andererseits den Verlusten in den Kabeln und der Filterung beim Senden gewählt wird.

13. Funksystem (1), das mehrere Basis-Sende/Empfangsstationen (BTS) umfaßt, die mit einer Gesamtheit von mobilen Geräten (MS) in Verbindung stehen, wobei jede Basis-Sende/Empfangsstation (BTS) so eingerichtet ist, daß sie regelmäßig auf einem Übertragungskanal (BCCH) sendet, *dadurch gekennzeichnet*, daß wenigstens eine der Basis-Sende/Empfangsstationen (BTS) so eingerichtet ist, daß sie auf dem Übertragungskanal (BCCH) eine Information sendet, die die Sendeleistung (TP(BTS)) des Kanals darstellt, und daß wenigstens ein mobiles Gerät (MS) in Zugangsphase in einer durch die Basis-Sende/Empfangsstation (BTS) geleiteten Zelle Mittel zum Liefern einer Messung der Empfangsleistung des Übertragungskanals (BCCH), Mittel zum Vergleichen dieser gemessenen Leistung mit der Sendeleistung (TP(BTS)) und Liefern einer Schätzung des Übertragungsverlustes zwischen dem mobilen Gerät (MS) und der Basis-Sende/Empfangsstation (BTS) und Mittel zum Einstellen der Sendeleistung des Zugangspakets (PA) auf die Höhe der optimalen Sendeleistung (TPo(MS)) umfaßt, die ausgehend von der Schätzung des Übertragungsverlustes und den Parametern des Systems (1) berechnet wird.

14. System (1) nach Anspruch 13, dadurch gekennzeichnet, daß die Mittel zur Lieferung einer Messung der empfangenen Leistung so eingerichtet sind, daß sie eine Mittelwertbildung von einer Gesamtheit von Messungen der empfangenen Leistung ausführen.

## Claims

1. Method of controlling the power at which an access packet (PA) is transmitted by a mobile (MS) on an access channel to a base transceiver station (BTS) of a mobile radio system, said base transceiver station (BTS) transmitting a broadcast control channel (BCCH) regularly, characterised in that:

   - at the base transceiver station (BTS) the broadcast control channel (BCCH) transmits a power indication representing the transmit power of said channel;
   - at the mobile (MS) the power received on said channel is measured, the measured power (RP(MS)) is compared with the transmit power indicated by the transmit power indication on the broadcast control channel (BCCH) to deduce an estimated propagation loss from the mobile (MS) to the base transceiver station (BTS), and an optimal transmit power (TPo(MS)), for the access packet (PA) is determined on the basis of the estimated propagation loss and parameters of the mobile radio system.

2. Method according to claim 1 characterised in that the measured power is averaged before it is compared with the transmit power.

3. Method according to claim 1 or claim 2 characterised in that the system parameters used to determine the optimal transmit power (TPo(MS)) for the access packet (PA) comprise the receive sensitivity of the base transceiver station (BTS) and an overall margin (X) to be used in calculating said optimal transmit power (TPo(MS)).

4. Method according to claim 3 characterised in that the optimal transmit power (TPo(MS)) for the access packet (PA) is determined from the equation:

$$TPo(MS)=TP(BTS)-RP(MS)+Ro(BTS)+X$$

   in which:

   - TP(BTS) is the power at which the broadcast control channel (BCCH) is transmitted by the base transceiver station (BTS),
   - RP(MS) is the received power as measured by the mobile (MS),
   - Ro(BTS) is the required receive power at the base transceiver station (BTS), and
   - X is said overall margin for the calculation.

5. Method according to claim 4 characterised in that the optimal power ((TPo(MS)) for transmission of the access packet (PA) is determined from the equation:

$$TPo(MS)= TPo(BTS)-RP(MS)+Ro(BTS)+y$$

in which:

- TPo(BTS) is a corrected transmit power equal to the transmit power TP(BTS) of the broadcast control channel (BCCH) increased by a base component ($\underline{x}$) of the overall margin (X), said base component ($\underline{x}$) being representative of any discrepancy in the link balance within the base transceiver station (BTS),
- RP(MS) is the received power as measured by the mobile (MS), optionally after averaging,
- Ro(BTS) is the required receive power at the base transceiver station (BTS), and
- $\underline{y}$ is a second component of the overall margin (X) allowing for receive losses at the mobile (MS).

6. Method according to claim 5 characterised in that the broadcast control channel (BCCH) broadcasts an indication of the required power (Ro(BTS)) at the input of the base transceiver station (BTS) and an indication of said corrected transmit power (TPo(BTS)).

7. Method according to claim 5 characterised in that the broadcast control channel (BCCH) broadcasts an indication of the corrected transmit power (TPo(BTS)) and the required power (Ro(BTS)) at the input of the base transceiver station is predefined in the standard (GSM, TETRA) for said mobile radio system.

8. Method according to claim 7 characterised in that before a mobile (MS) in the access phase transmits an access packet (PA) to the base transceiver station (BTS) on an access channel (RACH) the optimal power (TPo(MS)) for transmission of said access packet (PA) is calculated from the corrected transmit power indication TPo(BTS) received on the broadcast control channel (BCCH) , from the measured power RP(MS) received on said broadcast control channel (BCCH) by the mobile (MS), and from an internal required receive power indication (R'o(BTS)) representing the predefined required receive power Ro(BTS) increased by the second margin component ($\underline{y}$), according to the equation:

$$TPo(MS)=TPo(BTS)-RP(MS) +R'o(BTS)$$

9. Method according to any one of claims 5 to 8 characterised in that the corrected transmit power indication (TPo(BTS)) broadcast on the broadcast control channel (BCCH) is coded on a predetermined number of bits, such that the resulting control increment is sufficiently small in comparison to the nominal transmit power of the mobile (MS).

10. Method according to claim 9 characterised in that the number of hits on which said corrected transmit power indication (TPo(BTS)) is coded is three.

11. Method according to any one of claims 5 to 10 as applied to a mobile (MS) using the same antenna to transmit and to receive characterised in that the second margin component ($\underline{y}$) is made greater than or equal to a predetermined estimate of receive filter losses in said mobile (MS).

12. Method according to any one of claims 5 to 11 as applied to a base transceiver station (BTS) using the same antenna to transmit and to receive characterised in that the basic margin component ($\underline{x}$) is made greater than or equal to a predetermined estimate obtained at the base transceiver station (BTS) of the difference between the receive cable losses and the transmit cable and filter losses.

13. Mobile radio system (1) comprising a plurality of base transceiver stations (BTS) communicating with a set of mobiles (MS), each base transceiver station (BTS) being adapted to transmit regularly on a broadcast control channel (BCCH), characterised in that: at least one of said base transceiver stations (BTS) is adapted to transmit on the broadcast control channel (BCCH) an indication of the power (TP(BTS)) transmitted on said channel and at least one mobile (MS) in the access phase in a cell managed by said base transceiver station (BTS) comprises means for measuring the power at which the broadcast control channel (BCCH) is received, means for comparing the measured power with the transmitted power (TP(BTS)) and supplying an estimate of the propagation loss between the mobile (MS) and the base transceiver station (BTS), and means for adjusting the power at which an access packet (PA) is transmitted to an optimal transmit power level (TPo(MS)) calculated from the estimated propagation loss and parameters of said system (1).

14. System (1) according to claim 13 characterised in that the means for measuring the received power are adapted to average a set of received power measurements.

FIG_1

FIG_2

FIG_3